(19) Europäisches Patentamt
European Patent Office
Office européen des brevets

(11) **EP 4 654 155 A1**

(12) **EUROPEAN PATENT APPLICATION**

(43) Date of publication:
26.11.2025 Bulletin 2025/48

(21) Application number: 25178159.7

(22) Date of filing: 22.05.2025

(51) International Patent Classification (IPC):
*G06V 10/80* (2022.01)    *G06V 10/82* (2022.01)
*G06V 20/70* (2022.01)

(52) Cooperative Patent Classification (CPC):
G06V 10/82; G06V 10/80; G06V 20/70

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 22.05.2024 US 202463650826 P

(71) Applicant: GOOGLE LLC
Mountain View CA 94043 (US)

(72) Inventors:
• **AFIFI, Mahmoud Nasser Mohammed**
**Toronto, M5H 2G4 (CA)**
• **ABDELHAMED, Abdelrahman Kamel Siddek**
**Toronto, M5H 2G4 (CA)**
• **GO, Alec Michael**
**Mountain View, 94043 (US)**

(74) Representative: **Hau, Darren Jun Wai et al**
**Venner Shipley LLP**
**St James's**
**79 Oxford Street**
**Manchester M1 6EG (GB)**

(54) **CLASSIFICATION USING MULTIMODAL LARGE LANGUAGE MODELS**

(57)    Methods, systems, and apparatus for classification. In one aspect, a method includes receiving an input and a request to classify the input into one of a plurality of classes, processing the input using a multimodal model to generate (i) a description of the input and (ii) a class prediction, processing the description of the input and the class prediction using a text encoder embedding neural network to generate a (i) text description feature embedding and (ii) a prediction feature embedding, generating, from at least the description feature embedding and the prediction feature embedding, a query feature embedding representing the input, and classifying the input into one of the plurality of classes using the query embedding.

FIG. 1

**Description**

BACKGROUND

This specification relates to processing inputs using neural networks to generate output sequences.

Neural networks are machine learning models that employ one or more layers of nonlinear units to predict an output for a received input. Some neural networks include one or more hidden layers in addition to an output layer. The output of each hidden layer is used as input to the next layer in the network, i.e., the next hidden layer or the output layer. Each layer of the network generates an output from a received input in accordance with current value inputs of a respective set of parameters.

SUMMARY

This specification describes a system implemented as computer programs on one or more computers in one or more locations that classifies an input using a multimodal language model in response to receiving a request to classify the input into one (or more) of multiple classes.

To classify the input, the system can process the input to generate a description of the input and a class prediction for the input using the multimodal language model. The system can then process the description of the input and the class prediction to generate a respective text description feature embedding and a prediction feature embedding using a text encoder neural network.

The system can then generate a query embedding representing the input from at least the description feature embedding and the prediction feature embedding, and the system can classify the input into one of the multiple classes using the query embedding.

Particular embodiments of the subject matter described in this specification can be implemented so as to realize one or more of the following advantages.

A classification task can include classifying an input into one or more categories (e.g., classes) based on extracting features of the input using a pre-trained neural network. In some examples, a system can perform zero-shot classification by classifying inputs, such as images, into classes that were not explicitly presented during training. For example, a system can provide a request to a large language model (LLM) to generate descriptions of each of the classes. The system can process an input image using an image embedding neural network to generate an image embedding that represents visual features of the image. The system matches the input image embedding to a most similar class embedding based on a similarity metric, and the system can then classify the input as the class corresponding to the most similar class embedding.

However, relying solely on extracting visual features from the image can limit classification accuracy because the extracted visual features may not capture other descriptive features of the image. In contrast, the described system leverages multi-modal LLMs by generating text representations of an input to perform zero-shot classification, which results in more accurate classification of the input.

In particular, the system can process an input to generate both a description of the input and a class prediction for the input using the multimodal language model. The system can then process the description of the input and the class prediction to generate respective embeddings using a text encoder embedding neural network, and the system can generate a query embedding from the respective embeddings for use in classifying the input into one of the classes. Thus, the system can more accurately classify the input, as the system can leverage both the description and the class prediction to generate the query embedding, regardless of whether the initial class prediction is correct.

In this case, the system provides a first prompt to the multimodal language model requesting to generate the description of the input, and the system can provide the classes for classification and a second prompt to the multimodal language model requesting to generate the class prediction of the input. The first prompt and the second prompt can be used universally for classification tasks, providing flexibility and adaptability in classification without requiring specific training data for each classification task.

Additionally, the system can classify the input by using a classifier to process class embeddings corresponding to the multiple classes. The system can directly generate the class embeddings by directly using the class labels, by processing a text template that includes the class label, by processing the class label using the multimodal model to generate one or more class description embeddings, or a combination thereof. In this case, the system can further leverage the multi-modal LLM to generate the class embeddings, which enables the system to more accurately match a class to the input.

In some examples, if the input is an image, the system can generate an image feature embedding by processing the image using an image encoder neural network, and the system can also combine the image feature embedding with the respective embeddings of the description of the input and the class prediction to generate the query embedding. Thus, the system can utilize extracted features from both modalities to increase the accuracy of the classification.

Overall, the described techniques allow for performing classification of inputs with higher accuracy in comparison to solely extracting visual features by leveraging a multi-modal LLM to generate textual descriptions of the input to be classified. In particular, for image classification, the described system can use both text features and image features to classify an image by using the multi-modal LLM to process the description of the image and the initial image class prediction.

The details of one or more embodiments of the subject matter of this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 shows an example classification system.
FIG. 2 shows an example diagram of inputs and outputs of the classification system.
FIG. 3 shows an example diagram showing an example process for classification.
FIG. 4 is a flow diagram of an example process for classification using the classification system.
FIG. 5 shows example diagrams showing the example process for classification
FIG. 6 is a diagram of the results of implementing the classification system for classification tasks.
FIG. 7 is another diagram of the results of implementing the classification system for classification tasks.

Like reference numbers and designations in the various drawings indicate like elements.

DETAILED DESCRIPTION

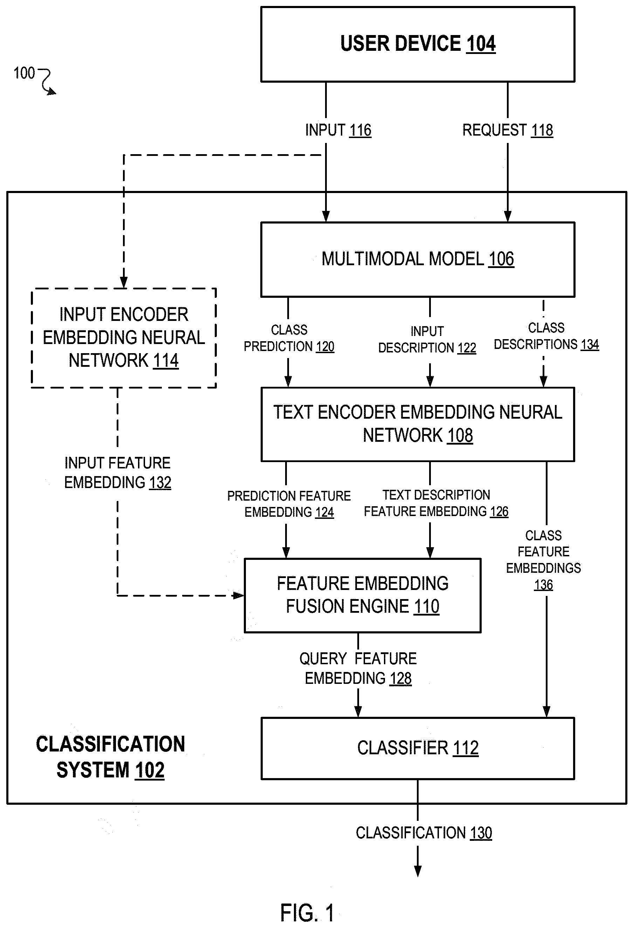

FIG. 1 shows an example system 100. The system 100 is an example of a system implemented as computer programs on one or more computers in one or more locations, in which the systems, components, and techniques described below can be implemented.

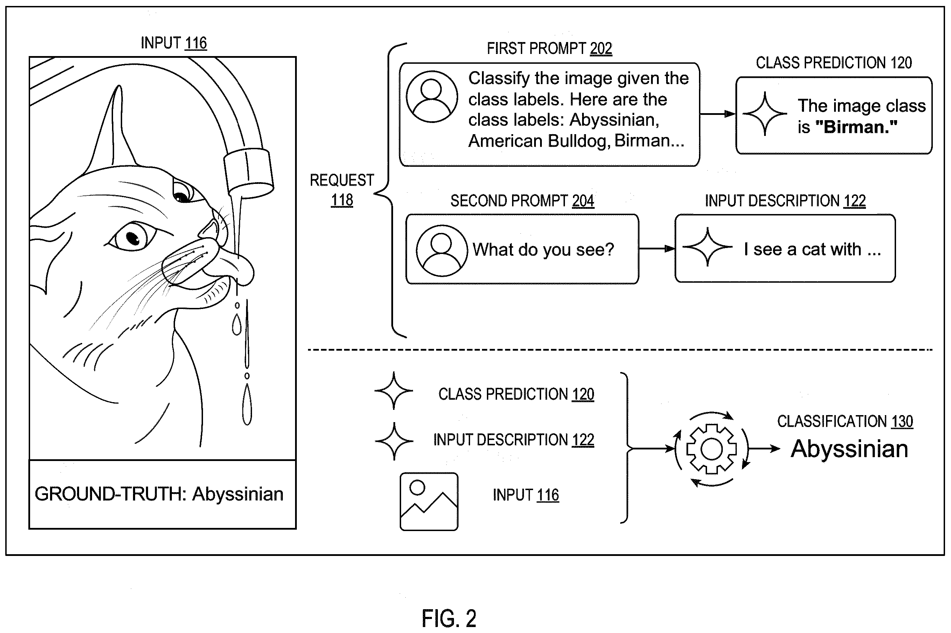

The system 100 includes a classification system 102 and a user device 104. The user device 104 can be a computer, and the user device 104 can provide an input 116 and a request 118 to the classification system 102. The input 116 can be an image, text, audio, or a video. The request 118 can include one or more prompts that include a request to classify the input 116 into one of multiple classes. That is, the request 118 can identify multiple classes. In some examples, different requests 118 can identify different classes. For example, as discussed in further detail below in FIG. 2, the input 116 can be an image of a cat, and the multiple classes can be multiple different breeds of cats.

The system 100 is configured to enhance zero-shot classification by leveraging a multimodal model 106 to combine both textual and visual features of the input 116. Traditionally, classification systems rely solely on visual features extracted from an image using a pre-trained neural network, which can limit accuracy. For example, existing systems may depend solely on a neural network trained using Contrastive Language-Image Pre-training (CLIP) to generate classifications of images.

In contrast, the system 100 leverages a multi-modal language model to generate text representations of an input. In particular, the classification system 102 is configured to process the input 116 and the request 118 from the user device 104 to generate a classification 130 of the input 116.

The classification system 102 includes a multimodal model 106 configured to process the input 116 and the request 118 to generate an initial class prediction of the input 116 and a description of the input 116. The multimodal model 106 can be pre-trained to perform classification, such that the multimodal model 106 does not require task-specific fine-tuning prior to performing a given classification task.

The classification system 102 further includes a text encoder embedding neural network 108 configured to process multiple text inputs to generate corresponding embeddings and a feature embedding fusion engine 110 configured to combine (e.g., fuse) multiple feature embeddings to generate a query feature embedding.

The classification system 102 further includes a classifier 112 configured to process the query feature embedding 128 and multiple class embeddings to generate the classification 130.

In some examples, the classification system 102 further includes an input encoder embedding neural network 114 configured to process the input 116 to generate an input feature embedding 132.

In particular, the classification system 102 processes the input 116 and the request 118 using the multimodal model 106 to generate a class prediction 120 and an input description 122.

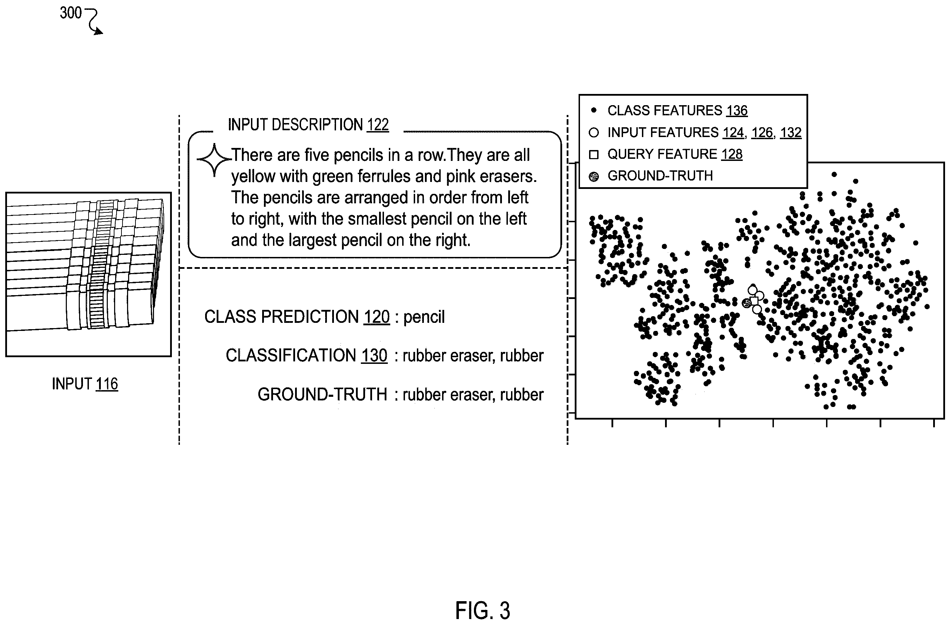

The class prediction 120 is an initial prediction of the classification of the input 116. The input description 122, on the other hand, includes text describing the input 116. That is, the class prediction 120 is a prediction of the class of the input 116, whereas the input description 122 is a visual description of the input 116, as shown in FIGs. 2 and 3. For example, if the multiple classes are types of cats (e.g., Abyssian, American Bulldog, Birman... etc), the class prediction 120 can be "Birman," and the input description 122 can be "I see a cat with light gray coloring."

To generate the class prediction 120 and the input description 122, the classification system 102 can provide a first prompt (e.g., an image classification prompt) and a second prompt (e.g., an image description prompt) from the request 118 to the multimodal model 106. Examples of the first prompt and the second prompt are shown in Table 1 below.

Table 1

| Image classification |
| --- |
| You are given an image and a list of class labels. Classify the image given the class labels. Answer using a single word if possible. Here are the class labels: {classes} |

| Image description |
| --- |
| What do you see? Describe any object precisely, including its type or class. |

In some examples, the request 118 can include a third prompt (e.g., a class description prompt) prompting the multimodal model 106 to generate a description for each class of the multiple classes. Examples of the third prompt are shown in Table 2 below.

Table 2

| Class description |
| --- |
| 1. Describe what a {class_label} looks like in one or two sentences. |
| 2. How can you identify a {class_label} in one or two sentences? |
| 3. What does a {class_label} look like? Respond with one or two sentences. |
| 4. Describe an image from the internet of a {class_label}. Respond with one or two sentences. |
| 5. A short caption of an image of a {class_label}: |

The multimodal model 106 can be a language model of any particular architecture that is configured to process inputs of different modalities, such as text and images, to generate an output. In this case, the multimodal model 106 can be pre-trained on a large set of multimodal data including text and image pairs. That is, the multimodal model 106 is configured to generate text that aligns with both textual and visual inputs, effectively integrating information from both modalities to generate the class prediction 120 and the input description 122. In some examples, the multimodal model 106 can be a decoder-only Transformer, such as those used in models like PaLI (Pathways Language and Image), PaLIGemma, Flamingo, or Gemini (e.g., Flamingo: a Visual Language Model for Few-Shot Learning (DeepMind, 2022), PaLI: A Jointly-Scaled Multilingual Language-Image Model (Google Research, 2022), and Gemini: Google's Multimodal Foundation Model (Google DeepMind, 2023)).

The classification system 102 can then encode the class prediction 120 and the input description 122 into respective embeddings. In particular, the classification system 102 can process the class prediction 120 using a text encoder embedding neural network 108 to generate a prediction feature embedding 124. Additionally, the classification system 102 can process the input description 122 using the text encoder embedding neural network 108 to generate a text description feature embedding 126.

The classification system 102 can then combine the prediction feature embedding 124 and the text description feature embedding 126 using the feature embedding fusion engine 110 to generate a query feature embedding 128. As used in this specification, a feature embedding is an ordered collection of numeric values (e.g., a vector, a sequence of multiple vectors, or a matrix of floating point or other numeric values) representing the input.

The classification system 102 can generate class feature embeddings 136 corresponding to the multiple classes using the text encoder embedding neural network 108. In particular, the system can directly generate the class feature embeddings 136 by directly using the class labels, by processing a text template that includes the class label, by processing the class descriptions 134, or a combination thereof, as described in further detail below with reference to FIG. 3.

In some examples, if the input 116 is an image, the classification system 102 can process the input 116 using an input encoder embedding neural network 114 to generate the input feature embedding 132. In this case, the classification system 102 can then combine the input feature embedding 132 with the prediction feature embedding 124 and the text description feature embedding 126 using the feature embedding fusion engine 110 to generate the query feature embedding 128.

The text encoder embedding neural network 108 and the input encoder embedding neural network 114 can be pre-trained to generate joint embedding representations of text and images. For example, the text encoder embedding neural network 108 and the input encoder embedding neural network 114 can be trained to produce aligned embeddings using contrastive learning, where a training system can bring matched image-text pairs closer in the embedding space while pushing apart mismatched pairs. In some other examples, the text encoder embedding neural network 108 and the input encoder embedding neural network 114 can be trained using an image-text matching objective, where a training system trains the encoder to classify a correspondence between a given text and image pair (e.g., using a binary classifier and cross-entropy loss). That is, the text encoder embedding neural network 108 can be any appropriate neural network that can map a text input to an embedding. For example, the text encoder embedding neural network 108 can be a Transformer, a convolutional neural network, a vision Transformer, or a recurrent neural network. The input encoder embedding neural network 114 can be any appropriate neural network that can map an image input to an embedding. For example, input encoder embedding neural network 114 can be a Transformer, a convolutional neural network, a vision Transformer, or a recurrent neural network.

The classification system 102 can then process the query feature embedding 128 using a classifier 112 to generate the classification 130. In particular, the classification system 102 can compare the query feature embedding 128 against the class feature embeddings 136, as described in further detail below with reference to FIG. 3.

. In some examples, the classifier 112 can be a classifying engine that can identify a class feature embedding 136 that is closest to the query feature embedding 128.

In some other examples, the classifier 112 can be a neural network that has any appropriate architecture that allows the classifier 112 to generate a classification 130 for the input 116. For example, the classifier 112 can be a convolutional neural network, e.g., a neural network having a ResNet architecture, , a multi-layer perceptron (MLP) architecture, and so on, or a Transformer neural network. That is, the classifier 112 can be trained on the specific task of processing multiple feature embeddings to classify an input.

By integrating information from both text and image modalities, the system 100 improves classification accuracy, especially in zero-shot settings where classes were not seen during training. Importantly, this approach provides flexibility and generalization across different classification tasks without requiring specialized training data.

FIG. 2 shows an example diagram of inputs and outputs of the classification system, e.g., the classification system 102 described with reference to FIG. 1.

The classification system 102 is configured to process an input 116 and a request 118 to generate the classification 130. For example, as illustrated in FIG. 2, the input 116 can be an image of a cat. In this case, the ground-truth class (e.g., the "true label") for the input 116 is the Abyssinian class.

The request 118 can include multiple prompts. In particular, the request 118 can include a first prompt 202 requesting the system to classify the input 116 into a class from multiple classes. For example, as shown in FIG. 2, the first prompt 202 can be: "classify the image given the class labels. Here are the class labels: Abyssinian, British Shorthair, Birman..." Additionally, the request 118 can include a second prompt 204 request to generate a description of the input 116. For example, as shown in FIG. 2, the second prompt 204 can be: "what do you see?"

The classification system 102 can process the input 116 and the request 118 using the multimodal model 106 to generate an input description 122 and a class prediction 120. The input description 122 can include a description of the input 116, such as "I see a cat with..." The class prediction 120 can include an initial class prediction for the input 116, such as "the image class is 'Birman'." That is, the class prediction 120 may be incorrect.

The classification system 102 can then process the input description 122 and the class prediction 120 using the text encoder embedding neural network 108, the feature embedding fusion engine 110, and the classifier 112 to generate the classification 130 for the input 116, as described in further detail below with reference to FIG. 3. In some examples, the classification system 102 can also process the input 116 using the input encoder embedding neural network 114 to generate the classification 130, as described in further detail below with reference to FIG. 3.

FIG. 3 shows an example diagram showing an example process for classification.

The classification system 102 can process the input 116 and a request 118 to generate the classification 130. For example, as shown in FIG. 3, the input 116 can be an image of multiple rubber pencil erasers.

The classification system 102 can process the input 116 and the request 118 using the multimodal model 106 to generate the class prediction 120 (e.g., "pencil") and the input description 122 (e.g., "There are five pencils in a row... ").

The classification system 102 can then process the class prediction 120 and the input description 122 using the text encoder embedding neural network 108 to generate a prediction feature embedding 124 and the text description feature embedding 126. In this case, the classification system 102 can also process the input 116 using an input encoder embedding neural network 114 to generate an input feature embedding 132. That is, the classification system 102 can generate the prediction feature embedding 124, the text description feature embedding 126, and the input feature embedding 132 (e.g., input features 124, 126, and 132).

Additionally, the classification system 102 can generate class feature embeddings 136 (e.g., class features 136) corresponding to the multiple classes to perform the classification.

In particular, the classification system 102 can directly generate the class feature embeddings 136 by directly using the class labels. For example, the classification system 102 can process each class label (e.g., directly from the textual labels, such as "pencil" or "eraser") using the text encoder embedding neural network 108 to generate respective class feature embeddings 136.

In another example, the classification system 102 can process a text template that includes the class label (e.g., "A photo of {class label}" where {class label} refers to the textual label of one of our classes) using the text encoder embedding neural network 108 to generate respective class feature embeddings 136.

In another example, the classification system 102 can process the one or more class descriptions using the text encoder embedding neural network to generate one or more class description embeddings, and the system can combine the one or more class description embeddings to generate the respective class embedding. In this case, the classification system 102 can use one or more prompts, as illustrated by Table 2 above, to generate the class descriptions 134. The classification system 102 can then use the feature embedding fusion engine to generate a single embedded class feature embedding for each class by combining each of the class description embeddings. **In** another example, the classification system 102 can generate the class feature embeddings 136 by combining (e.g., averaging) two or more of the class embeddings corresponding to the class label, the text template, and the class descriptions 134.

The classification system 102 then uses the classifier 112 to generate the classification 130 by classifying the input into one of the classes based on the query feature embedding 128. **In** particular, the classification system 102 determines a respective similarity score for each of the classes using the query feature embedding 128, and the classification system 102 can generate the classification 130 based on comparing the respective similarity scores, as shown by Equation 1:

$$(1) \qquad W = X_q^T M$$

where $W$ represents the similarity scores, $X_q^T$ represents the transpose of the query feature embedding 128, and M represents the class feature embeddings 136. The index of the final classification 130 is computed as argmax (W) corresponding to the maximum similarity score.

In some examples, the classification system 102 can instead process the query feature embedding 128 and the class feature embeddings 136 using a classifier 112 to generate a respective classification score for each of the classes. The classification system 102 can then select one or more classes based on the respective classification scores.

The graph of FIG. 3 shows how the query feature embedding 128 is better aligned with the ground-truth feature compared to the individual input features 124, 126, and 132. This illustrates that the fusion of visual and textual cues not only improves semantic alignment but also enhances classification performance by mitigating the shortcomings of any single modality. Thus, combining features from different modalities leverages the complementary strengths of the multimodal model 106, the text encoder embedding neural network 108, and the input encoder embedding neural network 114.

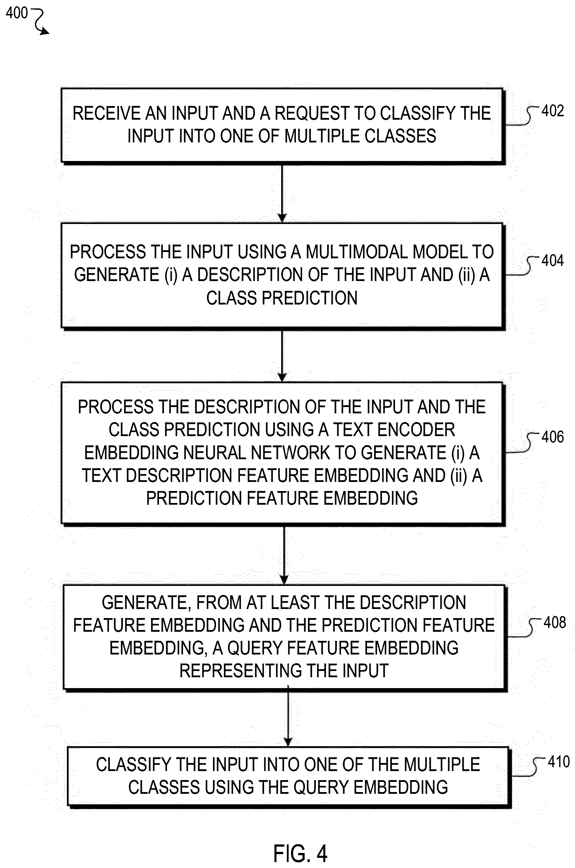

FIG. 4 is a flow diagram of an example process for classification using the classification system. For convenience, the process 400 will be described as being performed by a system of one or more computers located in one or more locations. For example, a system, e.g., the classification system 102 of FIG.1, appropriately programmed, can perform the process 400.

The system can receive an input and a request to classify the input into one of multiple classes (402). The input can be an image. That is, the request 118 can include one or more prompts that include a request to classify the input 116 into one of multiple classes. For example, the request 118 can identify multiple classes. In some examples, a user can provide multiple different requests 118 can identify different classes.

The system can process the input using a multimodal model to generate (i) a description of the input and (ii) a class prediction (404). In particular, the system can process the input and a first prompt that includes a respective class label for each of the multiple classes using the multimodal model to generate the class prediction. The system can also process the input and a second prompt to generate the description. The second prompt includes a request to generate a description of the input. For example, the second prompt can be a question asking "what do you see?"

The system can process the description of the input and the class prediction using a text encoder embedding neural network to generate (i) a text description feature embedding and (ii) a prediction feature embedding (406).

The system can generate, from at least the description feature embedding and the prediction feature embedding, a query feature embedding representing the input (508). In some examples, the system can generate the query feature embedding by processing the input using an image encoder embedding neural network to generate an image feature embedding and combining the image feature embedding and the prediction feature embedding to generate the query feature embedding. The text encoder embedding neural network and the image encoder embedding neural network can be pre-trained to generate joint embedding representations of text and images.

The system can classify the input into one of the multiple classes using the query embedding (410). In some examples, the system can determine, using the query embedding, a respective similarity score for each of the multiple classes and classify the input using the respective similarity scores.

In some other examples, the system can process the query embedding and respective class embeddings for each of the multiple classes using a classifier neural network to generate a respective classification score for each of the multiple classes, and the system can select one or more classes of the multiple classes based on the respective classification scores.

In particular, the system can process the query embedding and respective class embeddings by processing the multiple class labels using the text encoder embedding neural network to generate the respective class embeddings. For each class, the system can obtain a text template that includes the class label and process the text template using the text encoder neural network to generate the respective class embedding.

In some examples, the system can process the class label using the multimodal model to generate one or more class descriptions. The system can process the one or more class descriptions using the text encoder embedding neural network to generate one or more class description embeddings, and the system can combine the one or more class description embeddings to generate the respective class embedding.

In some examples, the system can process two or more of (i) the class label, (ii) a text template that includes the class label, or (iii) one or more class descriptions generated from the class label by the multimodal model embeddings using the text encoder neural network to generate the respective class embedding.

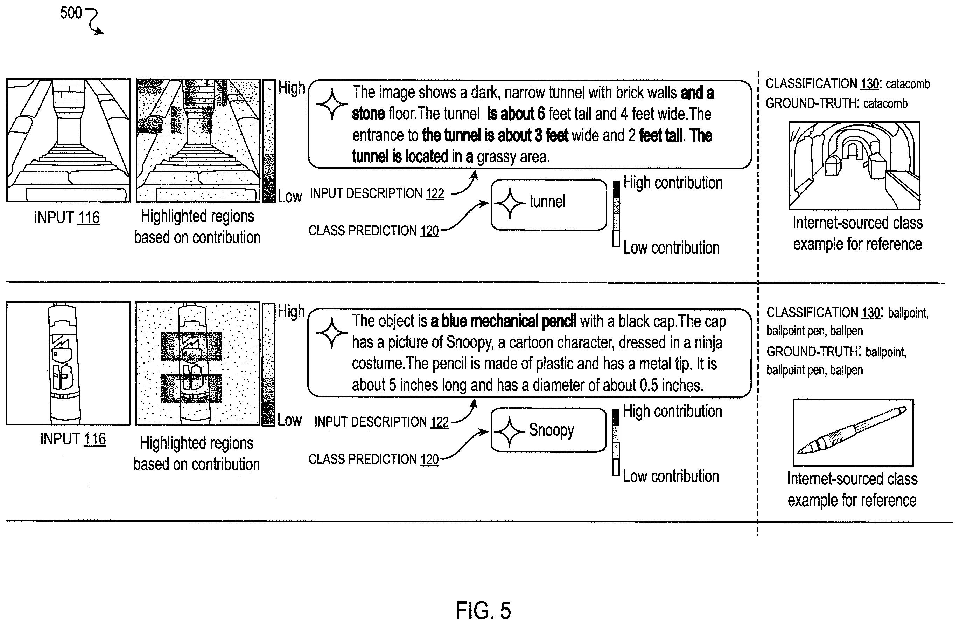

FIG. 5 shows example diagrams showing the example process for classification.

FIG. 5 shows two examples that illustrate the interpretability of the described classification method by visualizing the contribution of each input to the classification system 102 (e.g., an input image 116, a class prediction 120, and an input description 122) to the final classification decision (e.g., the classification 130). For each example, the figure highlights the most influential regions or text tokens that contribute to the classification 130.

For each example, the original input image is shown, followed by a corresponding heat map indicating spatial regions of the image that were most impactful to the final prediction identified using a sliding kernel occlusion method. In particular, the system can measure the resulting change in prediction confidence based on masking the patches of the image. Additionally, the system can measure the contribution of the text of the input description 122 using a similar occlusion technique at the word level based on masking one or more words at a time and observing the effect on the final prediction. The system can mark words whose removal caused significant shifts in the classification 130 as high-contribution terms.

As such, the examples illustrate how different input types contribute variably depending on the context. For example, in some cases (e.g., the catacomb image), the visual features dominate, while in others (e.g., the ballpoint pen image), the input description 122 can provide the decisive context. This demonstrates the complementary nature of the input modalities and the value of fusing the features in the proposed system to generate the classification 130.

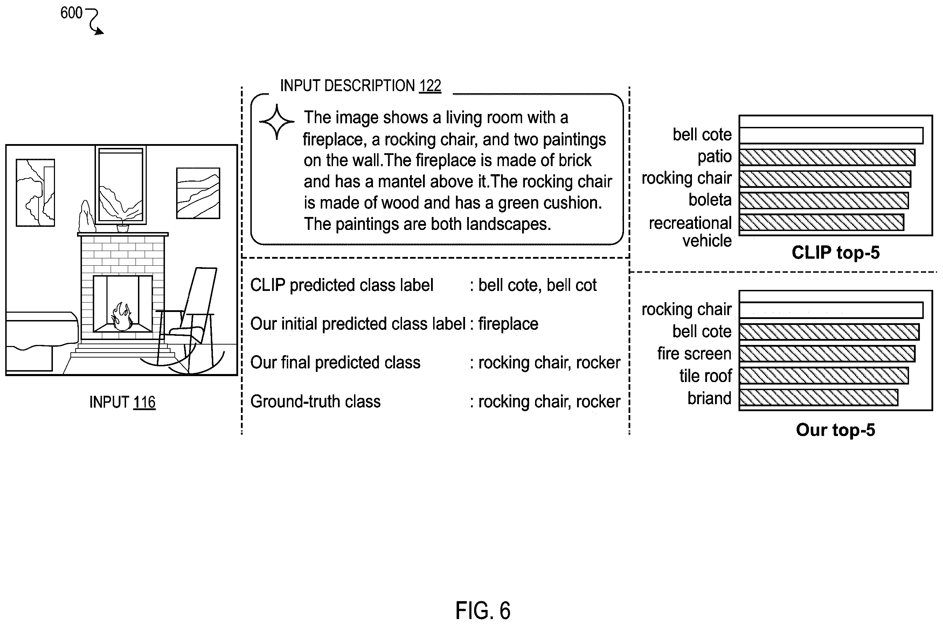

FIG. 6 is a diagram of the results of implementing the classification system for classification tasks.

The example of FIG. 6 compares the classification performance of another method using a zero-shot classification model (e.g., Contrastive Language-Image Pre-training (CLIP) and the described method, which leverages multiple feature representations derived from both visual and textual modalities.

In particular, the input image depicts a living room scene. The other method incorrectly classifies the image as "bell cote," while the described method, using features from an image description and an LLM-generated class prediction, correctly identifies the dominant object of interest ("rocking chair"). That is, the results illustrate that the LLM-derived description and prediction features provide additional information that enhances classification.

This example demonstrates that while the other method is limited to interpreting visual signals, the described method effectively incorporates LLM-generated image descriptions and initial class predictions, which results in a more semantically-aligned query representation. As such, the described method improves classification accuracy, particularly in cases where visual ambiguity or scene complexity impairs traditional image-only models.

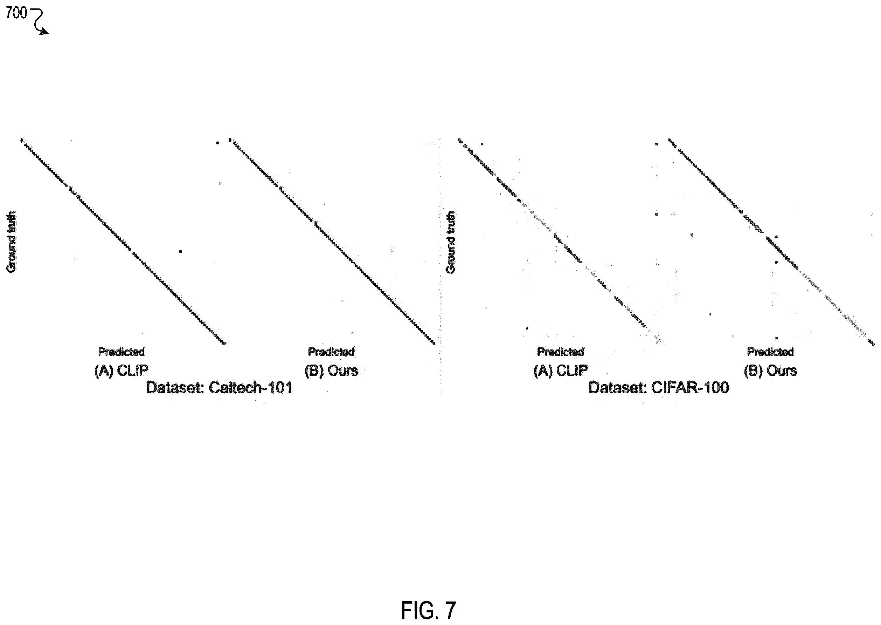

FIG. 7 is another diagram of the results of implementing the classification system for classification tasks.

The graph of FIG. 7 illustrates the performance of implementing the described classification system in comparison with conventional systems using different multiple datasets.

In particular, each graph in Figure 7 shows confusion matrices that illustrate how the performance of zero-shot image classification improves when using the proposed multimodal method compared to another model (e.g., CLIP). Specifically, by leveraging LLM-generated features (e.g., image descriptions and initial class predictions) into a fused feature representation, the system demonstrates a clear reduction in misclassifications based on an increased concentration of correctly predicted classes along the diagonal of the matrices. This indicates that leveraging rich textual semantics alongside visual embeddings allows for more accurate alignment between input features and target classes, outperforming conventional approaches that rely solely on visual inputs from other pretrained models.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

In this specification, the term "database" is used broadly to refer to any collection of data: the data does not need to be structured in any particular way, or structured at all, and it can be stored on storage devices in one or more locations. Thus, for example, the index database can include multiple collections of data, each of which may be organized and accessed differently.

Similarly, in this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

To provide for interaction with a user, embodiments of the subject matter described in this specification can be implemented on a computer having a display device, e.g., a CRT

(cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

This specification also provides the subject-matter of the following clauses:

Clause 1. A computer-implemented method for classification, comprising:

receiving an input and a request to classify the input into one of a plurality of classes;
processing the input using a multimodal model to generate (i) a description of the input and (ii) a class prediction;
processing the description of the input and the class prediction using a text encoder embedding neural network to generate (i) a text description feature embedding and (ii) a prediction feature embedding;
generating, from at least the description feature embedding and the prediction feature embedding, a query feature embedding representing the input; and
classifying the input into one of the plurality of classes using the query embedding.

Clause 2. The computer-implemented method of clause 1, wherein the input is an image.

Clause 3. The computer-implemented method of clause 2, wherein generating the query feature embedding comprises:

processing the input using an image encoder embedding neural network to generate an image feature embedding; and

combining the image feature embedding, the description feature embedding, and the prediction feature embedding to generate the query feature embedding.

Clause 4. The computer-implemented method of any preceding clause, wherein processing the input to generate the description of the input and the class prediction using the multimodal model comprises:

processing the input and a first prompt that comprises a respective class label for each of the plurality of classes using the multimodal model to generate the class prediction.

Clause 5. The computer-implemented method of any preceding clause, wherein processing the input to generate the description of the input and the class prediction using the multimodal model comprises:

processing the input and a second prompt to generate the description, wherein the second prompt comprises a request to generate the description of the input.

Clause 6. The computer-implemented method of any preceding clause, wherein classifying the input into one of the plurality of classes using the query embedding comprises:

determining, using the query embedding, a respective similarity score for each of the plurality of classes; and classifying the input using the respective similarity scores.

Clause 7. The computer-implemented method of any preceding clause, wherein classifying the input into one of the plurality of classes using the query embedding comprises:

processing the query embedding and respective class embeddings for each of the plurality of classes using a classifier to generate a respective classification score for each of the plurality of classes; and selecting one or more classes of the plurality of classes based on the respective classification scores.

Clause 8. The computer-implemented method of any preceding clause when dependent on clause 3, wherein the text encoder embedding neural network and the image encoder embedding neural network are pre-trained to generate joint embedding representations of text and images.

Clause 9. The computer-implemented method of clause 7 or 8, wherein processing the query embedding and respective class embeddings for each of the plurality of classes using a classifier to generate a respective classification score for each of the plurality of classes comprises:

processing the plurality of class labels using the text encoder embedding neural network to generate the respective class embeddings.

Clause 10. The computer-implemented method of any preceding clause when dependent on clause 7, wherein processing the plurality of class labels using the text encoder embedding neural network to generate the respective class embeddings comprises, for each class:

obtaining a text template that includes the class label; and processing the text template using the text encoder neural network to generate the respective class embedding.

Clause 11. The computer-implemented method of any preceding clause when dependent on clause 7, wherein processing the plurality of class labels using the text encoder embedding neural network to generate the respective class embeddings further comprises, for each class:

processing the class label using the multimodal model to generate one or more class descriptions; processing the one or more class descriptions using the text encoder embedding neural network to generate one or more class description embeddings; and combining the one or more class description embeddings to generate the respective class embedding.

Clause 12. The computer-implemented method of any preceding clause when dependent on clause 7 clause 11, wherein processing the plurality of class labels using the text encoder embedding neural network to generate the respective class embeddings comprises, for each class:

processing two or more of (i) the class label, (ii) a text template that includes the class label, or (iii) one or more class descriptions generated from the class label by the multimodal model embeddings using the text encoder neural network to generate the respective class embedding.

Clause 13. A system comprising:

one or more computers; and
one or more storage devices communicatively coupled to the one or more computers, wherein the one or more storage devices store instructions that, when executed by the one or more computers, cause the one or more computers to perform operations of the respective method of any one of clauses 1-12.

Clause 14. One or more non-transitory computer storage media storing instructions that when executed by one or more computers cause the one or more computers to perform operations of the respective method of any one of clauses 1-12.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

**Claims**

1.   A computer-implemented method for classification, comprising:

   receiving an input and a request to classify the input into one of a plurality of classes;
   processing the input using a multimodal model to generate (i) a description of the input and (ii) a class prediction;
   processing the description of the input and the class prediction using a text encoder embedding neural network to generate (i) a text description feature embedding and (ii) a prediction feature embedding;
   generating, from at least the description feature embedding and the prediction feature embedding, a query feature embedding representing the input; and
   classifying the input into one of the plurality of classes using the query embedding.

2.   The computer-implemented method of claim 1, wherein the input is an image.

3.   The computer-implemented method of claim 2, wherein generating the query feature embedding comprises:

   processing the input using an image encoder embedding neural network to generate an image feature embedding; and
   combining the image feature embedding, the description feature embedding, and the prediction feature embedding to generate the query feature embedding.

4.   The computer-implemented method of any preceding claim, wherein processing the input to generate the description of the input and the class prediction using the multimodal model comprises:
   processing the input and a first prompt that comprises a respective class label for each of the plurality of classes using the multimodal model to generate the class prediction.

5.   The computer-implemented method of any preceding claim, wherein processing the input to generate the description of the input and the class prediction using the multimodal model comprises:
   processing the input and a second prompt to generate the description, wherein the second prompt comprises a request to generate the description of the input.

6.   The computer-implemented method of any preceding claim, wherein classifying the input into one of the plurality of classes using the query embedding comprises:

   determining, using the query embedding, a respective similarity score for each of the plurality of classes; and
   classifying the input using the respective similarity scores.

7.   The computer-implemented method of any preceding claim, wherein classifying the input into one of the plurality of classes using the query embedding comprises:

   processing the query embedding and respective class embeddings for each of the plurality of classes using a classifier to generate a respective classification score for each of the plurality of classes; and

selecting one or more classes of the plurality of classes based on the respective classification scores.

8. The computer-implemented method of any preceding claim when dependent on claim 3, wherein the text encoder embedding neural network and the image encoder embedding neural network are pre-trained to generate joint embedding representations of text and images.

9. The computer-implemented method of claim 7, wherein processing the query embedding and respective class embeddings for each of the plurality of classes using a classifier to generate a respective classification score for each of the plurality of classes comprises:
processing the plurality of class labels using the text encoder embedding neural network to generate the respective class embeddings.

10. The computer-implemented method of claim 9, wherein processing the plurality of class labels using the text encoder embedding neural network to generate the respective class embeddings comprises, for each class:

obtaining a text template that includes the class label; and
processing the text template using the text encoder neural network to generate the respective class embedding.

11. The computer-implemented method of claim 9, wherein processing the plurality of class labels using the text encoder embedding neural network to generate the respective class embeddings further comprises, for each class:

processing the class label using the multimodal model to generate one or more class descriptions;
processing the one or more class descriptions using the text encoder embedding neural network to generate one or more class description embeddings; and
combining the one or more class description embeddings to generate the respective class embedding.

12. The computer-implemented method of claim 9, wherein processing the plurality of class labels using the text encoder embedding neural network to generate the respective class embeddings comprises, for each class:
processing, using the text encoder neural network, two or more of (i) the class label, (ii) a text template that includes the class label, or (iii) one or more class descriptions generated from the class label by the multimodal model, to generate the respective class embedding.

13. A system comprising:

one or more computers; and
one or more storage devices communicatively coupled to the one or more computers, wherein the one or more storage devices store instructions that, when executed by the one or more computers, cause the one or more computers to perform operations of the respective method of any one of claims 1-12.

14. One or more non-transitory computer storage media storing instructions that when executed by one or more computers cause the one or more computers to perform operations of the respective method of any one of claims 1-12.

FIG. 1

FIG. 2

EP 4 654 155 A1

300

INPUT DESCRIPTION 122

There are five pencils in a row. They are all yellow with green ferrules and pink erasers. The pencils are arranged in order from left to right, with the smallest pencil on the left and the largest pencil on the right.

INPUT 116

CLASS PREDICTION 120 : pencil

CLASSIFICATION 130 : rubber eraser, rubber

GROUND-TRUTH : rubber eraser, rubber

- CLASS FEATURES 136
- ○ INPUT FEATURES 124, 126, 132
- □ QUERY FEATURE 128
- ⊛ GROUND-TRUTH

FIG. 3

400

RECEIVE AN INPUT AND A REQUEST TO CLASSIFY THE INPUT INTO ONE OF MULTIPLE CLASSES — 402

PROCESS THE INPUT USING A MULTIMODAL MODEL TO GENERATE (i) A DESCRIPTION OF THE INPUT AND (ii) A CLASS PREDICTION — 404

PROCESS THE DESCRIPTION OF THE INPUT AND THE CLASS PREDICTION USING A TEXT ENCODER EMBEDDING NEURAL NETWORK TO GENERATE (i) A TEXT DESCRIPTION FEATURE EMBEDDING AND (ii) A PREDICTION FEATURE EMBEDDING — 406

GENERATE, FROM AT LEAST THE DESCRIPTION FEATURE EMBEDDING AND THE PREDICTION FEATURE EMBEDDING, A QUERY FEATURE EMBEDDING REPRESENTING THE INPUT — 408

CLASSIFY THE INPUT INTO ONE OF THE MULTIPLE CLASSES USING THE QUERY EMBEDDING — 410

FIG. 4

INPUT 116

Highlighted regions based on contribution

High

Low

The image shows a dark, narrow tunnel with brick walls and a stone floor. The tunnel is about 6 feet tall and 4 feet wide. The entrance to the tunnel is about 3 feet wide and 2 feet tall. The tunnel is located in a grassy area.

INPUT DESCRIPTION 122

CLASS PREDICTION 120

tunnel

High contribution

Low contribution

CLASSIFICATION 130: catacomb
GROUND-TRUTH: catacomb

Internet-sourced class example for reference

INPUT 116

Highlighted regions based on contribution

High

Low

The object is a blue mechanical pencil with a black cap. The cap has a picture of Snoopy, a cartoon character, dressed in a ninja costume. The pencil is made of plastic and has a metal tip. It is about 5 inches long and has a diameter of about 0.5 inches.

INPUT DESCRIPTION 122

CLASS PREDICTION 120

Snoopy

High contribution

Low contribution

CLASSIFICATION 130: ballpoint, ballpoint pen, ballpen
GROUND-TRUTH: ballpoint, ballpoint pen, ballpen

Internet-sourced class example for reference

FIG. 5

EP 4 654 155 A1

**INPUT DESCRIPTION 122**

The image shows a living room with a fireplace, a rocking chair, and two paintings on the wall.The fireplace is made of brick and has a mantel above it.The rocking chair is made of wood and has a green cushion. The paintings are both landscapes.

**INPUT 116**

CLIP predicted class label : bell cote, bell cot

Our initial predicted class label : fireplace

Our final predicted class : rocking chair, rocker

Ground-truth class : rocking chair, rocker

bell cote
patio
rocking chair
boleta
recreational
vehicle

**CLIP top-5**

rocking chair
bell cote
fire screen
tile roof
briand

**Our top-5**

FIG. 6

Dataset: CIFAR-100

Predicted
(A) CLIP

Predicted
(B) Ours

Ground truth

Dataset: Caltech-101

Predicted
(A) CLIP

Predicted
(B) Ours

Ground truth

700

FIG. 7

Europäisches
Patentamt

European
Patent Office

Office européen
des brevets

# EUROPEAN SEARCH REPORT

**Application Number**

EP 25 17 8159

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 11 907 337 B2 (GOOGLE LLC [US]) 20 February 2024 (2024-02-20) * column 1, line 17 - line 18 * * column 2, line 64 - column 3, line 13 * * column 5, line 14 - line 64 * ----- | 1-14 | INV. G06V10/80 G06V10/82 G06V20/70 |
| A | US 2024/160858 A1 (DAI WENLIANG [SG] ET AL) 16 May 2024 (2024-05-16) * paragraphs [0003], [0018] - paragraph [0019] * ----- | 1-14 | |
| A | RADHA N ET AL: "Multimodal Emotion Recognition using Acoustic and Visual Features", 2023 INTERNATIONAL CONFERENCE ON DATA SCIENCE, AGENTS & ARTIFICIAL INTELLIGENCE (ICDSAAI), IEEE, 21 December 2023 (2023-12-21), pages 1-5, XP034559184, DOI: 10.1109/ICDSAAI59313.2023.10452635 [retrieved on 2024-03-04] * section 2.2 on p.3301 * ----- | 1-14 | |
| T | ABDELRAHMAN ABDELHAMED ET AL: "What Do You See? Enhancing Zero-Shot Image Classification with Multimodal Large Language Models", ARXIV.ORG, CORNELL UNIVERSITY LIBRARY, 201 OLIN LIBRARY CORNELL UNIVERSITY ITHACA, NY 14853, 8 March 2025 (2025-03-08), XP091949744, * the whole document * ----- | | TECHNICAL FIELDS SEARCHED (IPC) G06F G06V |

The present search report has been drawn up for all claims

| Place of search | Date of completion of the search | Examiner |
|---|---|---|
| The Hague | 16 September 2025 | Wunderlich, Doreen |

EPO FORM 1503 03.82 (P04C01)

## ANNEX TO THE EUROPEAN SEARCH REPORT
## ON EUROPEAN PATENT APPLICATION NO.

EP 25 17 8159

This annex lists the patent family members relating to the patent documents cited in the above-mentioned European search report.
The members are as contained in the European Patent Office EDP file on
The European Patent Office is in no way liable for these particulars which are merely given for the purpose of information.

16-09-2025

| Patent document cited in search report | | Publication date | Patent family member(s) | | Publication date |
|---|---|---|---|---|---|
| US 11907337 | B2 | 20-02-2024 | CN | 112204575 A | 08-01-2021 |
| | | | EP | 3791322 A1 | 17-03-2021 |
| | | | US | 2021264203 A1 | 26-08-2021 |
| | | | US | 2024143700 A1 | 02-05-2024 |
| | | | WO | 2020102797 A1 | 22-05-2020 |
| US 2024160858 | A1 | 16-05-2024 | NONE | | |

EPO FORM P0459

For more details about this annex : see Official Journal of the European Patent Office, No. 12/82